# EUROPÄISCHE PATENTSCHRIFT

(11) **EP 2 245 327 B1**
(45) Veröffentlichungstag und Bekanntmachung des Hinweises auf die Patenterteilung: **12.10.2011**
(21) Anmeldenummer: 09704698.1
(22) Anmeldetag: 13.01.2009
(51) Int. Cl.: F16D 48/06, B60H 1/32

(54) **KUPPLUNGSSTEUERUNGSSYSTEM UND VERFAHREN ZUM BETREIBEN EINES KUPPLUNGSSTEUERUNGSSYSTEMS**
CLUTCH CONTROL SYSTEM AND METHOD FOR OPERATING A CLUTCH CONTROL SYSTEM
SYSTÈME DE COMMANDE D'EMBRAYAGE ET PROCÉDÉ POUR FAIRE FONCTIONNER UN TEL SYSTÈME

(30) Priorität: 22.01.2008 DE 102008005437
(43) Veröffentlichungstag der Anmeldung: 03.11.2010
(73) Patentinhaber: KNORR-BREMSE Systeme für Nutzfahrzeuge GmbH, 80809 München (DE)
(72) Erfinder: MELLAR, Jörg, 85652 Pliening (DE)
(74) Vertreter: Schönmann, Kurt
(86) Internationale Anmeldenummer: PCT/EP2009/000139
(87) Internationale Veröffentlichungsnummer: WO 2009/092529

(56) Entgegenhaltungen:
- DE-A1-102006 023 632
- US-A- 4 697 091

## Beschreibung

Die Erfindung betrifft ein System aus einem Kompressor, einem Steuergerät und einer dem Kompressor zugeordneten Kupplung, wobei das Steuergerät geeignet ist, die Kupplung zu öffnen und zu schließen, um Energie einzusparen, und das Steuergerät weiterhin geeignet ist, eine Überwachungsroutine auszuführen, in deren Rahmen die Kupplung geöffnet oder geschlossen wird, um eine Beschädigung von Kupplung, Kompressor und dem Kompressor nachgeordneten Komponenten zu vermeiden.

Die Erfindung betrifft weiterhin ein Verfahren zur Steuerung eines Systems aus einem Kompressor, einem Steuergerät und einer dem Kompressor zugeordneten Kupplung, wobei das Steuergerät die Kupplung öffnet und schließt, um Energie einzusparen, wobei eine Überwachungsroutine ausgeführt wird, in deren Rahmen die Kupplung öffnet oder schließt, um eine Beschädigung von Kupplung, Kompressor und dem Kompressor nachgeordneten Komponenten zu vermeiden.

Moderne Nutzfahrzeuge besitzen üblicherweise eine Druckluftversorgungsanlage, die gereinigte und getrocknete Druckluft für verschiedene Systeme des Nutzfahrzeugs bereitstellt. Beispielsweise werden die Betriebsbremsen und eine eventuell vorhandene Luftfederung des Nutzfahrzeugs von der Druckluftaufbereitungsanlage versorgt. In die Druckluftaufbereitungsanlage kann ein Steuergerät zum ansteuern der elektrischen Magnetventile und dem Auswerten von Sensorsignalen integriert sein. Die Magnetventile können alternativ auch von einem externen Steuergerät entsprechend verschiedener Systemparameter angesteuert werden. Derartige Steuergeräte erhalten weitere Systemparameter über einen seriellen Kommunikationsanschluss, zum Beispiel den CAN-Bus. Beispielsweise können Daten der Betriebsbremse und einer eventuell vorhandenen Luftfederung der Druckluftaufbereitungsanlage übermittelt werden. Die Druckluftaufbereitungsanlage selbst erhält die noch nicht gereinigte und getrocknete Druckluft von einem angeschlossenen Kompressor. Die Energie zum Betreiben des Kompressors kann in einfacher Weise über eine Welle vom Antriebsmotor des Nutzfahrzeugs zum Kompressor übertragen werden.

Da der Bedarf an Druckluft innerhalb des Nutzfahrzeugs normalerweise keinen Dauerbetrieb des Kompressors erfordert, kann eine Kupplung zwischen dem Antriebsmotor und dem Kompressor vorgesehen sein, um eine Entkopplung von Kompressor und Antriebsmotor zu ermöglichen. Dies ist wünschenswert, da der Betrieb des Kompressors Energie verbraucht, die eingespart werden kann, wenn keine Druckluft benötigt wird beziehungsweise wenn der vorhandene Druckluftvorrat den Druckluftbedarf der Verbraucher einige Zeit decken kann. Die Leerlaufphasen, während derer Energie im ausgekuppelten Zustand des Kompressors eingespart werden kann, sind insbesondere im Autobahnverkehr sehr lang, da dann der Druckluftverbrauch, insbesondere durch die Betriebsbremse, niedrig ist.

Neben der einfachen Funktionalität zur Energieeinsparung kann die Kupplung aber auch Defekte beim Betrieb des Kompressors und der dem Kompressor nachgeschalteten Komponenten verursachen beziehungsweise selbst durch einen Defekt ausfallen.

Aus der DE 10 2006 023 632 Al ist ein Kupplungssystem gemäß der Oberbegriffen der Ansprüche 1 und 3 bekannt

Der Erfindung liegt die Aufgabe zugrunde, ein Kompressorsystem bereitzustellen, welches Defekte des Systems erkennen und zumindest einige drohende Defekte des Systems selbstständig beheben kann.

Diese Aufgabe wird mit den Merkmalen der unabhängigen Ansprüche gelöst.

Vorteilhafte Ausführungsformen der Erfindung sind in den abhängigen Ansprüchen angegeben.

Das gattungsgemäße System wird dadurch weiterentwickelt, dass das Steuergerät dazu ausgelegt ist, eine Behebung eines aufgetretenen Fehlers innerhalb eines Zeitintervalls t_{slipactco} beziehungsweise t_{slipactoc} zu versuchen, wenn die Kupplung seit einer Zeitspanne t_{slipc} geschlossen ist, die aktuelle Kompressordrehzahl u_{cpac} ungleich einer erwarteten Kompressordrehzahl u_{cprs} plus/minus einem Toleranzwert S_{crtol} ist, die Differenz aus der aktuellen Kompressordrehzahl u_{cpac} und der erwarteten Kompressordrehzahl u_{cprs} plus/minus dem Toleranzwert S_{crtol} innerhalb eines Zeitintervalls t_{csi} anwächst und ein Zähler cₛₙᵣ kleiner als ein maximal erlaubter Wert cₘₐₓₛ für diesen Zähler ist, wobei die Kupplung zur Behebung zunächst geschlossen und anschließend wieder geöffnet beziehungsweise zunächst geöffnet und anschließend wieder geschlossen wird und dann der Zähler (Cₛₙᵣ) um 1 erhöht wird.

Das gattungsgemäße Verfahren wird dadurch weiterentwickelt, dass
eine Behebung eines aufgetretenen Fehlers innerhalb eines Zeitintervalls t_{slipactco} beziehungsweise t_{alipactoc} versucht wird, , wenn die Kupplung seit einer Zeitspanne tₛₗᵢₚₒ geöffnet ist, die aktuelle Kompressordrehzahl u_{cpac} ungleich einer minimalen Kompressordrehzahl S_{cmin} ist, wobei der minimale Wert im Falle einer vollständigen Entkopplung von Antriebsmotor und Kompressor durch die Kupplung Null ist, und ein Zähler cₛₒₙᵣ kleiner als ein maximal zulässiger Wert cₘₐₓₛₒ ist, wobei die Kupplung zur Behebung zunächst geschlossen und anschließend wieder geöffnet beziehungsweise zunächst geöffnet und anschließend wieder geschlossen wird und dann der Zähler (Cₛₙᵣ) um 1 erhöht wird.

Dieses wird vorteilhafterweise dadurch weiterentwickelt, dass im Rahmen der Überwachungsroutine ein Schlupf der geschlossenen Kupplung überwacht wird. Durch die Überwachung des Schlupfs der geschlossenen Kupplung ist ein zunehmender Verschleiß der Kupplung beziehungsweise ein fehlerhaftes Schließen der Kupplung detektierbar.

Nützlicherweise kann vorgesehen sein, dass im Rahmen der Überwachungsroutine ein Öffnen der Kupplung überwacht wird. Durch das Überwachen des Öffnens der Kupplung ist ein fehlerhaftes Schalten, insbesondere ein unvollständiges Öffnen, der Kupplung detektierbar.

Weiterhin kann vorgesehen sein, dass die Überwachungsroutine eine minimale Zeitspanne zwischen zwei Kupplungsbetätigungen vorsieht. Durch das mehrfache Betätigen der Kupplung innerhalb kurzer Zeiträume tritt durch die unverhältnismäßige Erwärmung ein starker Verschleiß auf, der zu einem vorzeitigen Ausfall der Kupplung führt. Das Vorsehen einer minimalen Zeitspanne zwischen zwei Kupplungsbetätigungen erhöht daher die Gesamtlebensdauer der Kupplung.

Es kann auch vorgesehen sein, dass die Überwachungsroutine eine maximale Zeitspanne vorsieht, während der die Kupplung geöffnet ist. Im geöffneten Zustand ist der der Kupplung nachgeordnete Kompressor nicht in Betrieb. Üblicherweise wird dieser Kompressor mit Hilfe von Öl geschmiert, welches während des Betriebs kontinuierlich aus einem Ölsumpf in den Bereich zwischen einem Kolben und einer Zylinderwand gefördert wird. Durch das Öffnen der Kupplung wird auch die Ölförderung eingestellt, wobei nach einiger Zeit keine ausreichende Schmierung zwischen dem Kolben und der Zylinderwand mehr vorhanden ist, da das ursprünglich dort vorhandene Öl in den Ölsumpf zurückgeflossen ist. Bei einem Wiederanlaufen des Kompressors durch ein Schließen der Kupplung ist daher eine erhöhte Abrasion an Kolben und Zylinderwand die Folge. Dies ist durch eine maximale Zeitspanne, während der die Kupplung geöffnet ist, verhinderbar, da eine ausreichende Schmierung zwischen Kolben und Zylinderwand durch Nachförderung von Öl gewährleistet werden kann.

Insbesondere kann dabei vorgesehen sein, dass die maximale Zeitspanne, während der die Kupplung geöffnet ist, von einer Umgebungstemperatur abhängt. Ist die Umgebungstemperatur des Kompressors geeignet, ein Einfrieren einer dem Kompressor nachgeordneten Förderleitung zu ermöglichen, so kann auf diese Weise bei Frostgefahr die Förderleitung zunächst entlüftet und dann von Kondenswasser trockengeblasen werden. Durch zyklisches Einschalten des Kompressors kann die Förderleitung immer wieder mit warmer Luft auf Temperatur gehalten werden.

Nützlicherweise kann vorgesehen sein, dass im Rahmen der Überwachungsroutine die Kompressordrehzahl überwacht wird. Ist die ermittelte Kompressordrehzahl größer als eine erlaubte maximale Kompressordrehzahl, so kann der Kompressor vor einer mechanischen Beschädigung dadurch geschützt werden, dass die Kupplung geöffnet wird.

Es kann auch vorgesehen sein, dass im Rahmen der Überwachungsroutine die Kupplungsdrehzahl überwacht wird. Auch die Kupplung kann durch Überwachung der Drehzahl vor einer mechanischen Überbelastung geschützt werden, wobei bei zu hoher Kupplungsdrehzahl die Kupplung geöffnet wird.

Nützlicherweise kann auch vorgesehen sein, dass im Rahmen der Überwachungsroutine Daten gespeichert werden, um eine Fehlerdiagnose oder statistische Auswertung zu ermöglichen. Durch das Speichern von Daten wird eine spätere erweiterte Fehlerdiagnose ermöglicht, mit deren Hilfe eine Ursachenforschung bezüglich des aufgetretenen Fehlers und somit eine weitere Verbesserung des Systems ermöglicht wird.

Bevorzugterweise kann vorgesehen sein, dass im Rahmen der Überwachungsroutine ein Warnsignal ausgegeben wird, wenn ein Bestandteil des Systems fehlerhaft arbeitet. Wenn die Überwachungsroutine eine Unregelmäßigkeit bezüglich der Kupplung oder eines anderen Systemteils detektiert, so kann durch die Ausgabe eines Warnsignals, in Form einer Warnlampe, eines akustischen Signals oder einer Mitteilung über ein Display eines Bordinstruments der Fahrzeugführer informiert werden und entsprechende Gegenmaßnahmen einleiten, insbesondere das Aufsuchen einer Servicestätte vor einem vollständigen Ausfall, welcher eventuell eine Weiterfahrt des Fahrzeugs unterbinden würde. Idealerweise wird dann die Kupplungsfunktion außer Kraft gesetzt, um weitere Beschädigungen zu verhindern.

Die Erfindung betrifft weiterhin ein Nutzfahrzeug mit einem erfindungsgemäßen System.

Die vorliegende Erfindung wird nun mit Bezug auf die begleitenden Zeichnungen anhand bevorzugter Ausführungsformen beispielhaft erläutert.

Es zeigen:
- Figur 1: eine schematische Darstellung eines Nutzfahrzeugs mit einem erfindungsgemäßen System;
- Figur 2: eine Übersicht über eine Überwachungsroutine in Form eines Flussdiagramms;
- Figur 3: ein Flussdiagramm für den Teilaspekt der Schaltabstandsüberwachung;
- Figur 4: ein Flussdiagramm für den Teilaspekt des Überdrehschutzes der Kupplung;
- Figur 5: ein Flussdiagramm für den Teilaspekt der Schlupfüberwachung der geschlossenen Kupplung;
- Figur 6: ein Flussdiagramm für den Teilaspekt des Überdrehschutzes des Kompressors;
- Figur 7: ein Flussdiagramm für den Teilaspekt der Schlupfüberwachung der geöffneten Kupplung;
- Figur 8: ein Flussdiagramm für den Teilaspekt des Abrasionsschutzes und
- Figur 9: ein Flussdiagramm für den Teilaspekt des Frostschutzes.

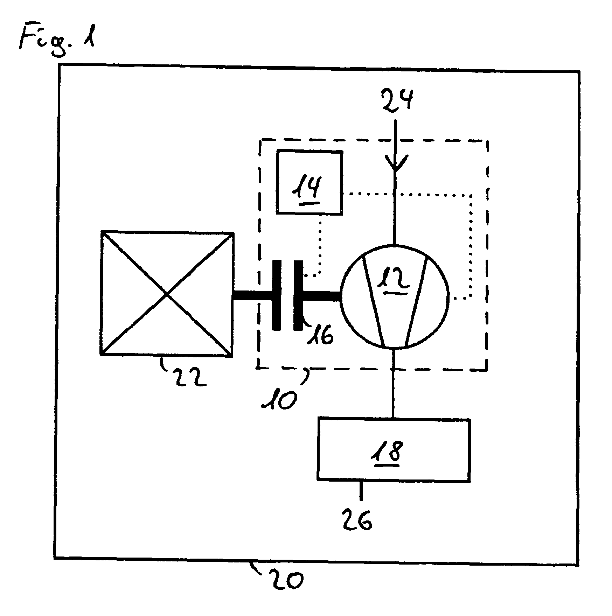

Figur 1 zeigt eine schematische Darstellung eines Nutzfahrzeugs mit einem erfindungsgemäßen System. Ein Nutzfahrzeug 20 wird von einem Antriebsmotor 22 angetrieben, der über eine Kupplung 16 weiterhin einen Kompressor 12 antreibt. Der Kompressor 12 bezieht Luft von einem Luftanschluss 24, die er in komprimierter Form zu einer Druckluftaufbereitungsanlage 18 fördert. Die Druckluftaufbereitungsanlage 18 verteilt die aufbereitete Druckluft wiederum an Verbraucher 26. Der Kompressor 12 bildet zusammen mit der Kupplung 16 und einem Steuergerät 14 ein System 10 welches auch als Kompressorsystem bezeichnet werden kann. Das Steuergerät 14 ist sowohl mit der Kupplung 16 als auch dem Kompressor 12 gekoppelt und kann die Kupplung 16 öffnen und schließen sowie den Kompressor 12 beeinflussen, beispielsweise durch Schalten eines nicht dargestellten Entlastungsventils. Die Ansteuerung des Entlastungsventils erfolgt beispielsweise pneumatisch, wobei der Druckauf- bzw. abbau innerhalb von 0,02 bis 1,0 sec vollzogen wird. Weiterhin kann das Steuergerät 14 noch einen nicht dargestellten Anschluss an den CAN-Bus aufweisen, über den Fehlerbotschaften an weitere nicht dargestellte Steuergeräte versendet und den Betriebszustand des Fahrzeugs betreffende Parameter empfangen werden. Die Parameter können beispielsweise eine Motordrehzahl, eine Umgebungstemperatur, eine Umgebungsfeuchtigkeit, ein Motordrehmoment, ein Ladedruck, eine Gaspedalstellung und eine Bremspedalstellung umfassen. Ein das Steuergerät 14 aufnehmendes Gehäuse sollte in üblicher Weise die Elektronik vor schädlichen Umwelteinflüssen schützen. Ein solches Gehäuse kann an dem Kompressor, dem Antriebsmotor oder dem Nutzfahrzeugchassis montiert werden. Um eine einfache Wartung zu gewährleisten, sollte ein modularer Austausch des Steuergeräts und ein Datenaustausch mit einer externen Diagnoseeinrichtung möglich sein.

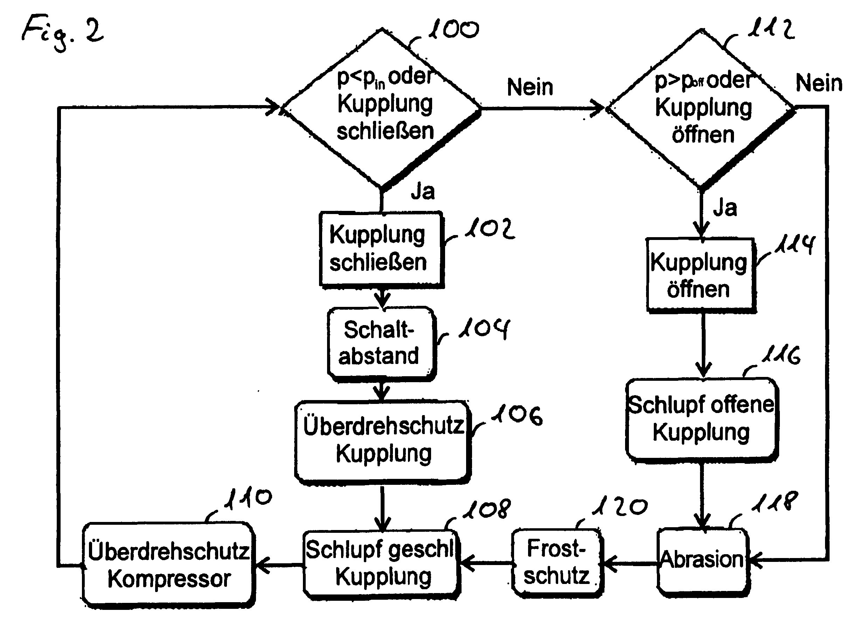

Figur 2 zeigt eine Übersicht über eine Überwachungsroutine in Form eines Flussdiagramms. Die dargestellte Überwachungsroutine umfasst sowohl das druckinduzierte Schalten der Kupplung zur Energieeinsparung als auch zu verschiedenen Teilaspekten zusammengefasste Subroutinen, die im Zusammenhang mit den folgenden Zeichnungen erläutert werden.

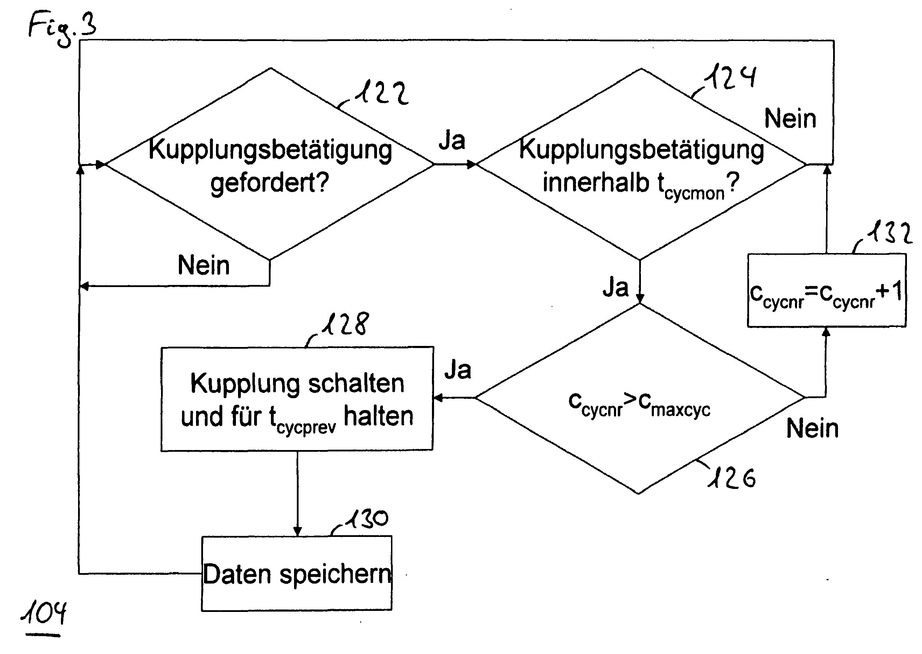

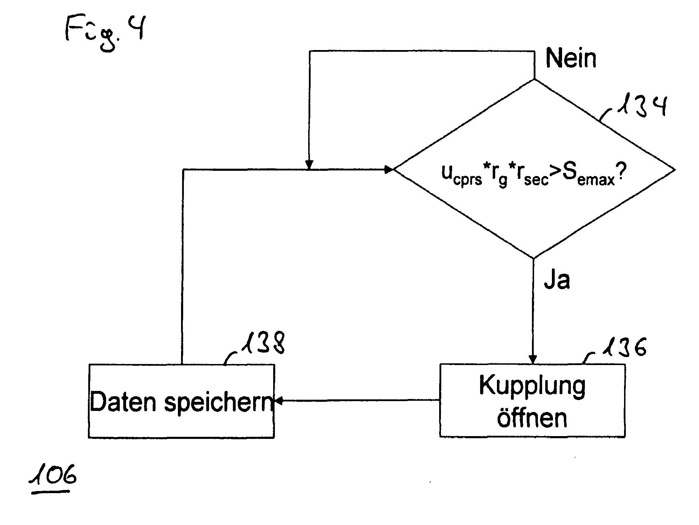

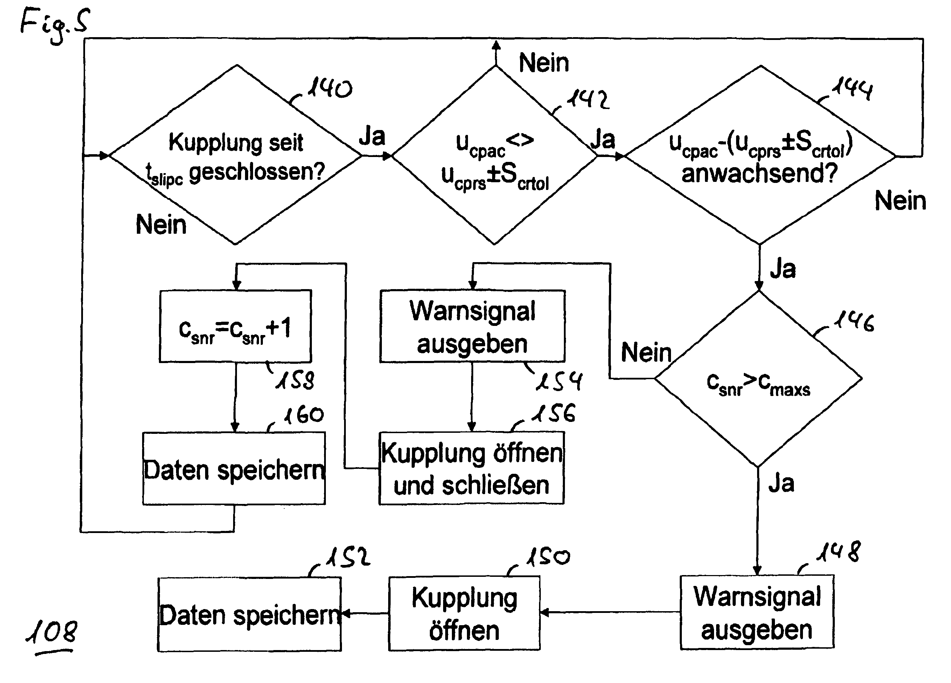

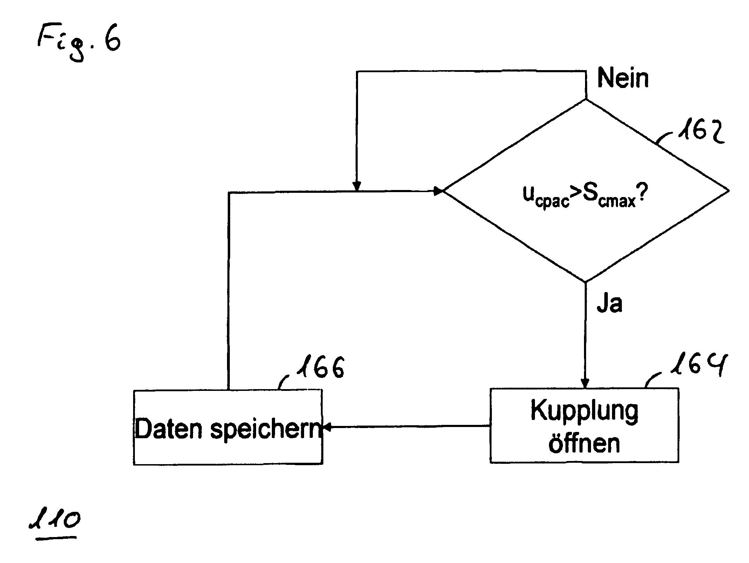

Als Startpunkt sei der Schritt 100 gewählt. Hier wird überprüft ob ein Schließen der Kupplung erwünscht ist. Der Wunsch die Kupplung zu schließen, kann beispielsweise druckinduziert sein, wenn der Druck p in Vorratsbehältern des Nutzfahrzeugs unter einen Einschaltdruck pᵢₙ sinkt, oder über einen in dem Nutzfahrzeug angeordneten Fahrzeugbus ein Schließen der Kupplung aufgrund eines Defekts außerhalb des Systems angefragt wird. Liegt ein solcher Wunsch vor, 100-Ja, so wird in Schritt 102 die Kupplung geschlossen. Anschließend wird bei Schritt 104 der Abstand zwischen zwei Kupplungsbetätigungen überwacht, was im Zusammenhang mit Figur 3 näher erläutert wird. Ein Überdrehschutz der Kupplung wird dann in Schritt 106 realisiert, welcher im Zusammenhang mit Figur 4 erläutert wird. Fortgefahren wird bei Schritt 108, in welchem der Schlupf der geschlossenen Kupplung überwacht wird. Dies wird im Zusammenhang mit Figur 5 erläutert. Bei Schritt 110 wird ein Überdrehschutz des Kompressors gewährleistet, welcher im Zusammenhang mit Figur 6 erläutert wird. Nach dem Schritt 110 wird wieder bei Schritt 100 fortgefahren.

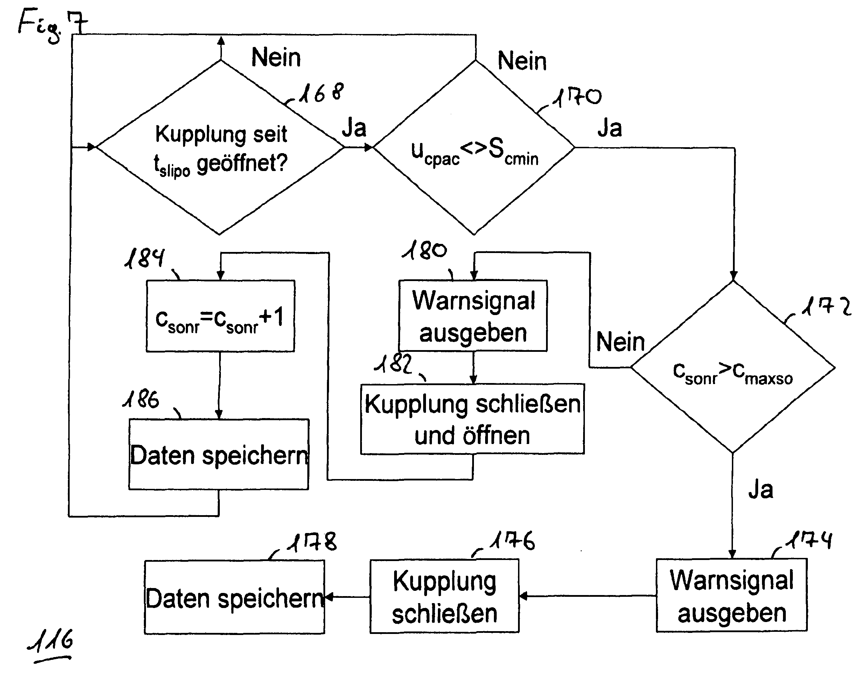

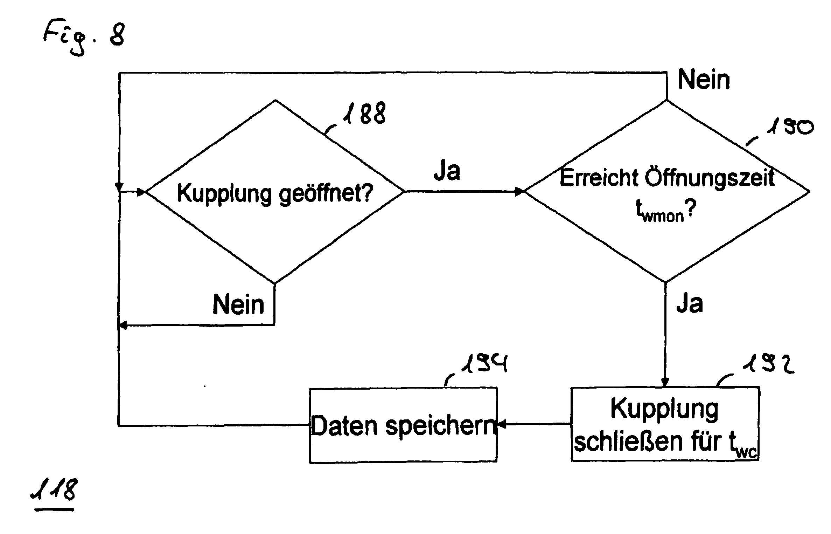

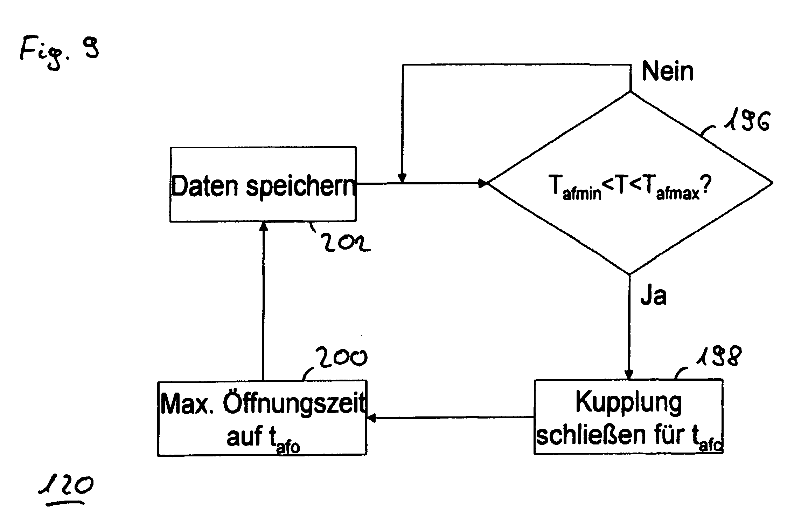

Liegt kein Wunsch vor, die Kupplung zu schließen, 100-Nein, so kann bei Schritt 112 fortgefahren werden. In diesem Schritt wird überprüft, ob stattdessen eine Aufforderung zum Öffnen der Kupplung vorliegt. Analog zu Schritt 100 kann diese Aufforderung wieder druckinduziert sein, indem der Druck p größer als ein Abschaltdruck p_{off} ist, oder über den Fahrzeugbus ein Öffnen der Kupplung nachgefragt wird. Liegt eine Aufforderung vor, die Kupplung zu öffnen, 112-Ja, so wird die Kupplung in Schritt 114 geöffnet. Im Folgenden wird in Schritt 116 der Schlupf der offenen Kupplung überwacht, was im Zusammenhang mit Figur 7 erläutert wird. In Schritt 118 ist dann ein Abrasionsschutz realisiert, welcher in Zusammenhang mit Figur 8 beschrieben ist. Von Schritt 118 aus geht es über den Schritt 120, in welchem ein in Figur 9 beschriebener Frostschutz realisiert ist, zu Schritt 108.

Wenn keine Anfrage zum Öffnen der Kupplung vorliegt, 112-Nein, so wird ausgehend von Schritt 112 direkt bei Schritt 118 fortgefahren.

Figur 3 zeigt ein Flussdiagramm für den Teilaspekt der Schaltabstandsüberwachung. Das dargestellte Flussdiagramm ist eine ausführlichere Darstellung des Schrittes 104 aus Figur 2. Ausgehend von Schritt 122 wird überprüft, ob eine Kupplungsbetätigung gefordert ist. Falls ja, 122-Ja, wird bei Schritt 124 überprüft, ob die Kupplungsbetätigung innerhalb der zu überwachenden Zeitspanne t_{cycmon} liegt. Falls ja, 124-Ja, wird im Folgenden bei Schritt 126 überprüft, ob ein Zähler c_{cycnr} größer als ein maximal erlaubter Wert c_{maxcyc} ist. Falls ja, 126-Ja, wird bei Schritt 128 die Kupplung geschaltet und für eine Zeitspanne t_{cycprev} in diesem Zustand gehalten. Aufgrund der Anordnung von Schritt 104 in der Überwachungsroutine wird die Kupplung bei Schritt 128 geschlossen. Diesen Vorgang betreffende Daten werden bei Schritt 130 gespeichert bevor wieder bei Schritt 122 fortgefahren wird.

Liegt die Kupplungsbetätigung nicht innerhalb der überwachten Zeitspanne t_{cycmon}, 124-Nein, wird nach Schritt 124 wieder bei Schritt 122 fortgefahren.

Ist der Zähler c_{cyrnr} nicht größer als der maximal erlaubte Wert c_{maxcyc}, 126-Nein, so wird bei Schritt 132 der Zähler c_{cycnr} um 1 erhöht und ebenfalls bei Schritt 122 fortgefahren.

Figur 4 zeigt ein Flussdiagramm für den Teilaspekt des Überdrehschutzes der Kupplung. Figur 4 ist eine ausführlichere Darstellung des Schrittes 106 aus Figur 1. Ausgegangen wird von Schritt 134, bei dem überprüft wird, ob eine mechanische Belastung der Kupplung zu groß ist. Zu diesem Zweck wird das Produkt aus der Kompressorumdrehungszahl u_{cprs} mit einer Übersetzung rg und einem Sicherheitsparameter r_{sec} multipliziert und mit einer maximal erlaubten Motordrehzahl Sₑₘₐₓ verglichen. Ist die maximal erlaubte Motordrehzahl Sₑₘₐₓ kleiner, 134-Ja, so wird in Schritt 136 die Kupplung geöffnet, in Schritt 138 die betreffenden Daten gespeichert und bei 134 fortgefahren.

Ist dies nicht der Fall, 134-Nein, so wird wieder bei 134 fortgefahren.

Figur 5 zeigt ein Flussdiagramm für den Teilaspekt der Schlupfüberwachung der geschlossenen Kupplung. Das dargestellte Flussdiagramm ist eine ausführlichere Darstellung des in Figur 2 dargestellten Schrittes 108. Ausgehend von Schritt 140 wird überprüft, ob die Kupplung seit einer Zeitspanne t_{slipc} geschlossen ist. Falls ja, 140-Ja, wird bei Schritt 142 überprüft, ob die aktuelle Kompressordrehzahl u_{cpac} ungleich einer erwarteten Kompressordrehzahl u_{cprs} plus/minus einem Toleranzwert S_{crtol} ist. Falls ja, 142-Ja, wird bei Schritt 144 überprüft, ob die Differenz aus der aktuellen Kompressordrehzahl u_{cpac} und der erwarteten Kompressordrehzahl u_{cprs} plus/minus dem Toleranzwert S_{crtol} innerhalb eines Zeitintervalls t_{csi} anwächst. Ist eine der drei genannten Bedingungen nicht erfüllt, 140-Nein, 142-Nein oder 144-Nein, so wird jeweils bei Schritt 140 fortgefahren. Ist die in Schritt 144 gegebene Bedingung erfüllt, 144-Ja, so wird bei Schritt 146 überprüft, ob ein Zähler cₛₙᵣ größer als ein maximal erlaubter Wert cₘₐₓₛ für diesen Zähler ist. Falls ja, 146-Ja, wird bei Schritt 148 ein Warnsignal ausgegeben, welches über eine Warnlampe, ein akustisches Warnsignal oder eine Textausgabe an einem Display realisierbar ist. Die Ausgabe kann über den CAN-Bus an ein ausführendes Steuergerät übermittelt werden. Anschließend wird bei Schritt 150 die Kupplung geöffnet und bei Schritt 152 dieser Vorgang durch Speichern der relevanten Daten dokumentiert.

Ist die Bedingung von Schritt 146 nicht erfüllt, 146-Nein, so wird bei Schritt 154 analog zu Schritt 148 ebenfalls ein Warnsignal ausgegeben und in Schritt 156 durch ein Öffnen und anschließendes Schließen der Kupplung innerhalb einer Zeitspanne t_{elipactoc} eine Fehlerbehebung versucht. Bei Schritt 158 wird dann der Zähler cₛₙᵣ um 1 erhöht und bei Schritt 160 die relevanten Daten gespeichert bevor bei Schritt 140 fortgefahren wird.

Figur 6 zeigt ein Flussdiagramm für den Teilaspekt des Überdrehschutzes des Kompressors. Ein derartiges Überdrehen kann durch ein versehentliches Auswählen einer zu niedrigen Gangstufe geschehen. Dieses Flussdiagramm ist eine ausführlichere Darstellung des in Figur 2 dargestellten Schrittes 110. Gestartet wird bei Schritt 162, in dem überprüft wird, ob die aktuelle Kompressordrehzahl u_{cpac} größer als eine maximal zulässige Kompressordrehzahl S_{cmax} ist. Falls ja, 162-Ja, wird bei Schritt 164 die Kupplung geöffnet und anschließend bei Schritt 166 die relevanten Daten gespeichert, bevor wieder bei Schritt 162 fortgefahren wird. Falls nein, 162-Nein, wird bei Schritt 162 fortgefahren.

Figur 7 zeigt ein Flussdiagramm für den Teilaspekt der Schlupfüberwachung der geöffneten Kupplung. Dieses Flussdiagramm ist eine ausführlichere Darstellung des in Figur 2 dargestellten Schrittes 116. Ausgehend von Schritt 168 wird zunächst überprüft, ob die Kupplung seit einer Zeitspanne tₛₗᵢₚₒ geöffnet ist. Falls ja, 168-Ja, wird in Schritt 170 überprüft, ob die aktuelle Kompressordrehzahl u_{cpac} ungleich einer minimalen Kompressordrehzahl S_{cmin} ist, wobei der minimale Wert im Falle einer vollständigen Entkopplung von Antriebsmotor und Kompressor durch die Kupplung Null ist. Ist eine der beiden Bedingungen nicht erfüllt, 168-Nein oder 170-Nein, so wird bei 168 fortgefahren. Ist die Bedingung von Schritt 170 erfüllt, 170-Ja, so wird in Schritt 172 überprüft, ob ein Zähler cₛₒₙᵣ größer als ein maximal zulässiger Wert cₘₐₓₛₒ ist. Falls ja, 172-Ja, wird bei Schritt 174 ein Warnsignal ausgegeben, welches über eine Warnlampe, ein akustisches Signal beziehungsweise eine Textausgabe auf einem Display realisierbar ist. Die Ausgabe kann über den CAN-Bus an ein ausführendes Steuergerät übermittelt werden. Dann wird bei Schritt 176 die Kupplung geschlossen und anschließend bei Schritt 178 der Vorgang anhand relevanter Daten gespeichert.

Ist die Bedingung von Schritt 172 nicht erfüllt, 172-Nein, so wird bei Schritt 180 analog zu Schritt 174 ebenfalls ein Warnsignal ausgegeben. Anschließend wird bei Schritt 182 die Kupplung zunächst geschlossen und anschließend innerhalb einer Zeitspanne t_{slipactco} geöffnet, um eine Behebung des Fehlers zu versuchen. Bei Schritt 184 wird dann der Zähler cₛₒₙᵣ um 1 erhöht bevor bei Schritt 186 die relevanten Daten gespeichert werden. Nach Schritt 186 wird wieder bei Schritt 168 fortgefahren.

Figur 8 zeigt ein Flussdiagramm für den Teilaspekt des Abrasionsschutzes. Das in Figur 8 dargestellte Flussdiagramm ist eine ausführlichere Darstellung des in Figur 2 dargestellten Schrittes 118. Ausgehend von Schritt 188 wird zunächst überprüft, ob die Kupplung geöffnet ist. Falls ja, 188-Ja, wird in Schritt 190 überprüft, ob die Öffnungszeit der Kupplung die zu überwachende Zeitspanne t_{wmon} erreicht. Falls die Bedingung von Schritt 188 beziehungsweise Schritt 190 nicht erfüllt ist, 188-Nein beziehungsweise 190-Nein, wird bei Schritt 188 fortgefahren. Falls die Bedingung von Schritt 190 erfüllt ist, 190-Ja, wird zunächst in Schritt 192 die Kupplung für eine Zeitspanne t_{wc} geschlossen und dann bei Schritt 194 dieser Vorgang gespeichert, bevor bei Schritt 188 fortgefahren wird.

Figur 9 zeigt ein Flussdiagramm für den Teilaspekt des Frostschutzes. Das in Figur 9 dargestellte Flussdiagramm ist eine ausführlichere Darstellung des in Figur 2 gezeigten Schrittes 120. Ausgehend von Schritt 196 wird zunächst überprüft, ob eine Umgebungstemperatur T zwischen einer minimalen Umgebungstemperatur T_{afmin} und einer maximalen Umgebungstemperatur T_{afmax} liegt und ob die maximale Öffnungszeit t_{afo} erreicht wird. Falls nein, 196-Nein, wird bei Schritt 196 fortgefahren. Falls ja, 196-Ja, wird zunächst bei Schritt 198 die Kupplung für eine Zeitspanne t_{afc} geschlossen, dann bei Schritt 200 die maximale Öffnungszeit auf t_{afo} gesetzt und anschließend die relevanten Daten in Schritt 202 gespeichert, bevor bei Schritt 196 fortgefahren wird. Es ist denkbar, bei Schritt 196 die Luftfeuchtigkeit der Umgebung zu berücksichtigen und als zusätzliche Bedingung in Schritt 196 zu überprüfen, ob sie größer als eine minimale Luftfeuchtigkeit H_{afmin} ist. Durch diese Routine kann vorteilhafterweise nach dem Erreichen des Systemdrucks die Förderleitung noch während der Zeitspanne t_{afc} trockengeblasen werden.

Die in den Figuren 3 bis 9 dargestellten Flussdiagramme sind im Wesentlichen zyklisch aufgebaut, können jedoch auch als endliche Flussdiagramme dargestellt werden, wobei dann der Startpunkt dem zuerst genannten Schritt entspricht und der oder die Endpunkte oder ein erneutes Erreichen des Startpunktes ohne eine Erhöhung einer Indexvariable dem jeweiligen Endpunkt des entsprechenden Schrittes aus Figur 2 zugeordnet werden können. Die verwendeten Indexvariablen werden jeweils nach einem Zeitintervall tᵣₑₙₜ von etwa einer Stunde wieder auf Null gesetzt, wenn sie innerhalb dieses Zeitraumes nicht verändert wurden. Weiterhin gibt die folgende Tabelle Beispielintervalle für die verschiedenen verwendeten Parameter, die als Anhaltspunkt zu verstehen sind.

| **Name** | **Intervall** | **bevorzugter Wert** |
|---|---|---|
| Pin | 2,0-3,0 bar | 2,5 bar |
| p_{off} | 5,0-15,0 bar | 12,5 bar |
| t_{slipc} | 300-500 ms | 400 ms |
| tₛₗᵢₚₒ | 300-500 ms | 400 ms |
| t_{csi} | 2-7 sec | 5 sec |
| t_{slipactoc} | 2-7 sec | 5 sec |
| t_{slipactco} | 2-7 sec | 5 sec |
| t_{afc} | 2-7 min | 5 min |
| t_{afo} | 2-7 min | 5 min |
| tᵣₑₙₜ | 0,8-1,2 h | 1 h |
| t_{cycmon} | 8-12 sec | 10 sec |
| t_{cycprev} | 0,8-1,2 h | 1 h |
| t_{wmon} | 12-18 min | 15 min |
| t_{wc} | 24-36 sec | 30 sec |
| cₘₐₓₛ | 2-5 | 3 |
| c_{maxcyc} | 4-6 | 5 |
| cₘₐₓₛₒ | 2-5 | 3 |
| T_{afmax} | 4-7 °C | 5 °C |
| T_{afmin} | 0-2 °C | 1 °C |
| H_{afmin} | 10-20% | 15% |
| S_{cmax} | 2500-4000 u/min | 3300 u/min |
| Sₑₘₐₓ | 1900-3000 u/min | 2480 u/min |
| S_{crtol} | 15-25% | 20% |
| S_{cmin} | 0-10 u/min | 0 u/min |
| r_{g} | | 0,5-1,5 |
| r_{sec} | 1-1,5 | 1,1 |

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: System
- 12: Kompressor
- 14: Steuergerät
- 16: Kupplung
- 18: Druckluftaufbereitungsanlage
- 20: Nutzfahrzeug
- 22: Antriebsmotor
- 24: Luftanschluss
- 26: Verbraucher
- 100: Kupplung schließen angefragt?
- 102: Kupplung schließen
- 104: Schaltabstand
- 106: Überdrehschutz Kupplung
- 108: Schlupf geschlossener Kupplung
- 110: Überdrehschutz Kompressor
- 112: Kupplung öffnen angefragt?
- 114: Kupplung öffnen
- 116: Schlupf geöffneter Kupplung
- 118: Abrasion
- 120: Frostschutz
- 122: Kupplungsbetätigung gefordert?
- 124: Kupplungsbetätigung innerhalb t_{cycmon}?
- 126: c_{cycnc} größer als c_{maxcyc}?
- 128: Kupplung schalten und für t_{cycprev} halten
- 130: Daten speichern
- 132: c_{cycnr} erhöhen
- 134: Kupplungsdrehzahl zu hoch?
- 136: Kupplung öffnen
- 138: Daten speichern
- 140: Kupplung seit t_{slipc} geschlossen?
- 142: u_{cpac} abweichend von u_{cpra±}S_{crtol}?
- 144: u_{cpac}- (Uₑₚᵣₐ±S_{crtol}) anwachsend?
- 146: cₛₙᵣ größer als cₘₐₓₛ?
- 148: Warnsignal ausgeben
- 150: Kupplung öffnen
- 152: Daten speichern
- 154: Warnsignal ausgeben
- 156: Kupplung öffnen und schließen
- 158: cₛₙᵣ erhöhen
- 160: Daten speichern
- 162: U_{cpac}>S_{cmax}?
- 164: Kupplung öffnen
- 166: Daten speichern
- 168: Kupplung seit tₛₗᵢₚₒ geöffnet?
- 170: u_{cpac}<>S_{cmin}?
- 172: cₛₒₙᵣ größer als cₘₐₓₛₒ?
- 174: Warnsignal ausgeben
- 176: Kupplung schließen
- 178: Daten speichern
- 180: Warnsignal ausgeben
- 182: Kupplung schließen und öffnen
- 184: cₛₒₙᵣ erhöhen
- 186: Daten speichern
- 188: Kupplung geöffnet?
- 190: Erreicht Öffnungszeit t_{wmon}?
- 192: Kupplung schließen für t_{wc}
- 194: Daten speichern
- 196: Temperatur kleiner als T_{afmin} oder größer T_{afmax}
- 198: Kupplung schließen für t_{afc}
- 200: maximale Öffnungszeit auf t_{afo} setzen
- 202: Daten speichern

## Patentansprüche

1. System (10) aus einem Kompressor (12), einem Steuergerät (14) und einer dem Kompressor (12) zugeordneten Kupplung (16), wobei das Steuergerät (14) geeignet ist, die Kupplung (16) zu öffnen und zu schließen, um Energie einzusparen, und wobei das Steuergerät (14) weiterhin geeignet ist, eine Überwachungsroutine auszuführen, in deren Rahmen die Kupplung (16) geöffnet oder geschlossen wird, um eine Beschädigung von Kupplung (16), Kompressor (12) und dem Kompressor (12) nachgeordneten Komponenten (18, 26) zu vermeiden, **dadurch gekennzeichnet, dass** das Steuergerät (14) dazu ausgelegt ist, eine Behebung eines aufgetretenen Fehlers innerhalb eines Zeitintervalls (t_{slipactco}) beziehungsweise (t_{slipactoc}) zu versuchen, wenn
- die Kupplung seit einer Zeitspanne (t_{slipc}) geschlossen ist,
- die aktuelle Kompressordrehzahl (u_{cpac}) ungleich einer erwarteten Kompressordrehzahl (u_{cprs}) plus/minus einem Toleranzwert (S_{crtot}) ist,
- die Differenz aus der aktuellen Kompressordrehzahl (u_{cpac}) und der erwarteten Kompressordrehzahl (u_{cprs}) plus/minus dem Toleranzwert (S_{crtol}) innerhalb eines Zeitintervalls (t_{csi}) anwächst und
- ein Zähler (tₛₙᵣ) kleiner als ein maximal erlaubter Wert (cₘₐₓₛ) für diesen Zähler ist, wobei die Kupplung (16) zur Behebung zunächst geschlossen und anschließend wieder geöffnet beziehungsweise zunächst geöffnet und anschließend wieder geschlossen wird und dann der Zähler (cₛₙᵣ) um 1 erhöht wird.

2. Nutzfahrzeug (20) mit einem System (10) nach Anspruch 1.

3. Verfahren zur Steuerung eines Systems (10) aus einem Kompressor (12), einem Steuergerät (14) und einer dem Kompressor (12) zugeordneten Kupplung (16), wobei das Steuergerät (14) die Kupplung (16) öffnet und schließt, um Energie einzusparen, wobei eine Überwachungsroutine ausgeführt wird, in deren Rahmen die Kupplung (16) öffnet oder schließt, um eine Beschädigung von Kupplung (16), Kompressor (12) und dem Kompressor (12) nachgeordneten Komponenten (18, 26) zu vermeiden, **dadurch gekennzeichnet, dass** eine Behebung eines aufgetretenen Fehlers innerhalb eines Zeitintervalls (t_{slipactco}) beziehungsweise (t_{slipactoc}) versucht wird, wenn
- die Kupplung seit einer Zeitspanne (tₛₗᵢₚₒ) geöffnet ist,
- die aktuelle Kompressordrehzahl (u_{cpac}) ungleich einer minimalen Kompressordrehzahl (S_{cmin}) ist, wobei der minimale Wert im Falle einer vollständigen Entkopplung von Antriebsmotor und Kompressor durch die Kupplung Null ist, und
- ein Zähler (cₛₒₙᵣ) kleiner als ein maximal zulässiger Wert (cₘₐₓₛₒ) ist,
wobei die Kupplung (16) zur Behebung zunächst geschlossen und anschließend wieder geöffnet beziehungsweise zunächst geöffnet und anschließend wieder geschlossen wird und dann der Zähler (cₛₙᵣ) um 1 erhöht wird.

4. Verfahren nach Anspruch 3, **dadurch gekennzeichnet, dass** im Rahmen der Überwachungsroutine ein Schlupf der geschlossenen Kupplung (16) überwacht wird.

5. Verfahren nach Anspruch 3 oder 4, d**adurch gekennzeichnet**, dass im Rahmen der Überwachungsroutine ein Öffnen der Kupplung (16) überwacht wird.

6. Verfahren nach einem der Ansprüche 3 bis 5, **dadurch gekennzeichnet, dass** die Überwachungsroutine eine minimale Zeitspanne zwischen zwei Kupplungsbetätigungen vorsieht.

7. Verfahren nach einem der Ansprüche 3 bis 6, **dadurch gekennzeichnet, dass** die Überwachungsroutine eine maximale Zeitspanne vorsieht, während der die Kupplung (16) geöffnet ist.

8. Verfahren nach Anspruch 7, **dadurch gekennzeichnet, dass** die maximale Zeitspanne, während der die Kupplung (16) geöffnet ist, von einer Umgebungstemperatur abhängt.

9. Verfahren nach einem der Ansprüche 3 bis 8, **dadurch gekenntzeichnet**, dass im Rahmen der Überwachungsroutine die Kompressordrehzahl überwacht wird.

10. Verfahren nach einem der Ansprüche 3 bis 9, **dadurch gekennzeichnet, dass** im Rahmen der Überwachungsroutine die Kupplungsdrehzahl überwacht wird.

11. Verfahren nach einem der Ansprüche 3 bis 10, **dadurch gekennzeichnet, dass** im Rahmen der Überwachungsroutine Daten gespeichert werden, um eine Fehlerdiagnose oder statistische Auswertung zu ermöglichen.

12. Verfahren nach einem der Ansprüche 3 bis 11, **dadurch gekennzeichnet, dass** im Rahmen der Überwachungsroutine ein Warnsignal ausgegeben wird, wenn ein Bestandteil des Systems (10) fehlerhaft arbeitet.

## Claims

1. System (10) comprising a compressor (12), a control unit (14) and a clutch (16) which is assigned to the compressor (12), with the control unit (14) being suitable for opening and closing the clutch (16) in order to save energy, and with the control unit (14) furthermore being suitable for carrying out a monitoring routine during the course of which the clutch (16) is opened or closed in order to prevent damage to the clutch (16), the compressor (12) and components (18, 26) situated downstream of the compressor (12) , **characterized in that** the control unit (14) is designed to attempt, within a time interval (t_{slipactco}) or (t_{slipactoc}), to eliminate a fault which has occurred if
- the clutch has been closed for a time period (t_{slipc}),
- the present compressor rotational speed (u_{cpac}) is not equal to an expected compressor rotational speed (u_{cprs}) plus/minus a tolerance value (S_{crtol}),
- the difference between the present compressor rotational speed (u_{cpac}) and the expected compressor rotational speed (u_{cprs}) plus/minus the tolerance value (S_{crtol}) increases within a time interval (t_{csi}), and
- a counter (cₛₙᵣ) is lower than a maximum permitted value (cₘₐₓₛ) for said counter,
wherein for elimination, the clutch (16) is initially closed and is subsequently opened again, or is initially open and is subsequently closed again, and the counter (cₛₙᵣ) is then increased by 1.

2. Utility vehicle (20) having a system (10) according to Claim 1.

3. Method for controlling a system (10) comprising a compressor (12), a control unit (14) and a clutch (16) which is assigned to the compressor (12), with the control unit (14) opening and closing the clutch (16) in order to save energy, with a monitoring routine being carried out, during the course of which the clutch (16) opens or closes in order to prevent damage to the clutch (16), the compressor (12) and components (18, 26) situated downstream of the compressor (12), **characterized in that** an elimination of a fault which has occurred is attempted, within a time interval (t_{slipactco}) or (t_{slipactoc}), if
- the clutch has been open for a time period (tₛₗᵢₚₒ),
- the present compressor rotational speed (u_{cpac}) is not equal to a minimum compressor rotational speed (s_{cmin}), wherein the minimum value in the event of a complete decoupling of drive motor and compressor by the clutch is zero, and
- a counter (cₛₒₙᵣ) is lower than a maximum admissible value (cₘₐₓₛₒ),
wherein for elimination, the clutch (16) is initially closed and is subsequently opened again, or is initially open and is subsequently closed again, and the counter (cₛₙᵣ) is then increased by 1.

4. Method according to Claim 3, **characterized in that** a slip of the closed clutch (16) is monitored during the course of the monitoring routine.

5. Method according to Claim 3, **characterized in that** an opening of the clutch (16) is monitored during the course of the monitoring routine.

6. Method according to one of Claims 3 to 5, **characterized in that** the monitoring routine provides a minimum time period between two clutch actuations.

7. Method according to one of Claims 3 to 6, **characterized in that** the monitoring routine provides a maximum time period during which the clutch (16) is open.

8. Method according to Claim 7, **characterized in that** the maximum time period during which the clutch (16) is open is dependent on an ambient temperature.

9. Method according to one of Claims 3 to 8, **characterized in that** the compressor rotational speed is monitored during the course of the monitoring routine.

10. Method according to one of Claims 3 to 9, **characterized in that** the clutch rotational speed is monitored during the course of the monitoring routine.

11. Method according to one of Claims 3 to 10, **characterized in that**, during the course of the monitoring routine, data are stored in order to permit a fault diagnosis or statistical evaluation.

12. Method according to one of Claims 3 to 11, **characterized in that**, during the course of the monitoring routine, a warning signal is output if a component of the system (10) is operating defectively.

## Revendications

1. Système (10) composé d'un compresseur (12), d'un appareil (14) de commande et d'un embrayage (16) associé au compresseur (12), l'appareil (14) de commande étant propre à ouvrir et à fermer l'embrayage (16) pour économiser de l'énergie et l'appareil (14) de commande étant en outre propre à effectuer un programme de contrôle dans le cadre duquel l'embrayage (16) est ouvert ou fermé pour empêcher un endommagement de l'embrayage (16), du compresseur (12) et des éléments (18, 26) en aval du compresseur, **caractérisé en ce que** l'appareil (14) de commande est conçu pour s'efforcer de supprimer une erreur apparue dans un intervalle de temps (t_{slipactco}) ou (t_{slipactoc}), si
- l'embrayage est fermé depuis un laps de temps (t_{slipc}),
- la vitesse (U_{cpac}) de rotation du compresseur est différente d'une vitesse (U_{cprs}) de rotation du compresseur à laquelle on s'attend plus/moins une valeur (S_{crtol}) de tolérance,
- la différence entre la vitesse (U_{cpac}) de rotation du compresseur instantanée et la vitesse (U_{cprs}) de rotation du compresseur à laquelle on s'attend plus/moins la valeur (S_{crtol}) de tolérance augmente dans un intervalle de temps (t_{csi}) et
- un compteur (cₛₙᵣ) est plus petit qu'une valeur (cₘₐₓₛ) maximum permise pour ce compteur,
dans lequel l'embrayage (16) est pour la suppression d'abord fermé et ensuite réouvert ou d'abord ouvert et ensuite refermé et **en ce que** le compteur (cₛₙᵣ) est augmenté de 1.

2. Véhicule utilitaire ayant un système (10) suivant la revendication 1.

3. Procédé de commande d'un système (10) composé d'un compresseur (12), d'un appareil de commande et d'un embrayage (16) associé au compresseur (12), l'appareil de commande ouvrant et fermant l'embrayage (16) pour économiser de l'énergie, un programme de contrôle étant exécuté dans le cadre duquel l'embrayage (16) s'ouvre ou se ferme pour empêcher un endommagement de l'embrayage (16), du compresseur (12) et d'éléments (18, 26) en aval du compresseur, **caractérisé en ce que** l'on s'efforce de supprimer une erreur apparue dans un intervalle de temps (t_{slipactco}) ou (t_{slipactoc}), si
- l'embrayage est fermé depuis un laps de temps (t_{slipc}),
- la vitesse (U_{cpac}) de rotation du compresseur est différente d'une vitesse (U_{cprs}) de rotation du compresseur à laquelle on s'attend plus/moins une valeur (s_{crtol}) de tolérance,
- la différence entre la vitesse (U_{cpac}) de rotation du compresseur instantanée et la vitesse (U_{cprs}) de rotation du compresseur à laquelle on s'attend plus/moins la valeur (S_{crtol}) de tolérance augmente dans un intervalle de temps (t_{csi}) et
- un compteur (cₛₙᵣ) est plus petit qu'une valeur (cₘₐₓₛ) maximum permise pour ce compteur,
dans lequel l'embrayage (16) est pour la suppression d'abord fermé et ensuite réouvert ou d'abord ouvert et ensuite refermé et **en ce que** le compteur (cₛₙᵣ) est augmenté de 1.

4. Procédé suivant la revendication 3, **caractérisé en ce que**, dans le cadre du programme de contrôle, on contrôle un glissement de l'embrayage (16) fermé.

5. Procédé suivant la revendication 3 ou 4, **caractérisé en ce que**, dans le cadre du programme de contrôle, on contrôle une ouverture de l'embrayage (16).

6. Procédé suivant l'une des revendications 3 à 5, **caractérisé en ce que** le programme de contrôle prévoit un laps de temps minimum entre deux actionnements de l'embrayage.

7. Procédé suivant l'une des revendications 3 à 6, **caractérisé en ce que** le programme de contrôle prévoit un laps de temps maximum pendant lequel l'embrayage (16) est ouvert.

8. Procédé suivant la revendication 7, **caractérisé en ce que** le laps de temps maximum pendant lequel l'embrayage (16) est ouvert dépend d'une température ambiante.

9. Procédé suivant l'une des revendications 3 à 8, **caractérisé en ce que**, dans le cadre du programme de contrôle, on contrôle la vitesse de rotation du compresseur.

10. Procédé suivant l'une des revendications 3 à 9, **caractérisé en ce que**, dans cadre du programme de contrôle, on contrôle la vitesse de rotation de l'embrayage.

11. Procédé suivant l'une des revendications 3 à 10, **caractérisé en ce que**, dans le cadre du programme de contrôle, on mémorise des données pour rendre possible un diagnostic d'erreur ou une évaluation statistique.

12. Procédé suivant l'une des revendications 3 à 11, **caractérisé en ce que**, dans le cadre du programme de contrôle, on émet un signal d'avertissement si un élément constitutif du système (10) opère de façon défectueuse.
